# EUROPEAN PATENT APPLICATION

(11) **EP 4 431 768 A1**
(43) Date of publication of application: **18.09.2024**
(21) Application number: 22894989.7
(22) Date of filing: 21.11.2022
(51) Int. Cl.: F16K 1/02, F16K 27/02

(54) **STOP VALVE**

(30) Priority: 22.11.2021 CN 202122876117 U
(71) Applicant: Zhejiang Dunan Artificial Environment Co., Ltd., Shaoxing Zhejiang 311835 (CN)
(72) Inventor: LOU, Feng, Shaoxing, Zhejiang 311835 (CN); SHOU, Jie, Shaoxing, Zhejiang 311835 (CN); WANG, Bin, Shaoxing, Zhejiang 311835 (CN)
(74) Representative: Meyer-Dulheuer MD Legal Patentanwälte PartG mbB
(86) International application number: PCT/CN2022/133175
(87) International publication number: WO 2023/088460

(57) **Abstract**

A stop valve (100) is provided. The stop valve (100) includes a valve body (110) and a valve core (130). A valve cavity (110a) and a mounting cavity (110b) are provided in the valve body; the mounting cavity (110b) is communicated with the valve cavity (110a); the valve core (130) is disposed in the mounting cavity (110b) and can move in the mounting cavity (110b), so as to extend into the valve cavity (110a) and turn on/off the stop valve (100); the stop valve (100) further includes an internal threaded sleeve (140); the internal threaded sleeve (140) is located in the mounting cavity (110b) and is provided adjacent to the valve cavity (110a); the valve core (130) is threadedly connected to the internal threaded sleeve (140).

## Description

### CROSS-REFERENCE TO RELATED APPLICATIONS

This application claims priority to Chinese patent application No. 202122876117.4, filed on November 22, 2021, and titled "STOP VALVE" the content of which is hereby incorporated by reference in its entirety.

### TECHNICAL FIELD

The present invention relates to the field of refrigeration technology, in particular, to a stop valve.

### BACKGROUND

The stop valve, also known as cut-off valve, belongs to forced sealing valves. The stop valves play an important role in cutting off and throttling the medium in the pipeline in which the stop valves are located. In the related art, the stop valves generally include a valve body and a valve core. The valve core is disposed in the valve body, and the valve core is provided with external threads. The valve body is provided with internal threads matching with the external threads. The external threads and the internal threads join by screwing, so that the valve core can move in the valve body to open/close the stop valve. In a brass stop valve in the related art, the inner thread is generally disposed in the valve body cavity. Medium flow make the internal threads suffer from impact and corrosion of the medium and damage, which leads to the valve core rotation jam. In order to solve the above technical problems, in some of the related arts, the internal thread section is provided at the valve body port or partially provided above the valve body port, whereby the internal thread section is protected from media impact and its service life is extended. However, the external thread section of the valve core that matches with the internal thread section also needs to be at least partially extended out of the valve body, resulting in a longer length of the valve core and a greater amount of material required for processing. At the same time, in order to realize sealing between the valve core and the valve body or valve seat, and to ensure the stability when the valve core moves, etc., the valve core needs to be designed with more complex structures, as well as many parts with which to work together, increasing the processing and assembly difficulties of the stop valve, and reducing production efficiency.

### SUMMARY

A stop valve is provided in conjunction with embodiments of the present invention.

The stop valve of the present invention includes a valve body and a valve core. The valve body is provided with a valve cavity and a mounting cavity. The mounting cavity is in communication with the valve cavity. The valve core is dispose in the mounting cavity and capable of moving in the mounting cavity, so as to extend into the valve cavity to turn on/off the stop valve. The stop valve further includes an internal threaded sleeve. The internal threaded sleeve is disposed in the mounting cavity and adjacent to the valve cavity, and the valve core is threadedly connected to the internal threaded sleeve.

In some embodiments, a side of the mounting cavity away from the valve cavity is provided with an end port, a limiting member is disposed at the end port, and the valve core is provided with an upper limiting portion. The upper limiting portion is restricted by the limiting member, so as to limit a moving distance of the valve core towards the end port, thereby preventing affecting operation of the stop valve caused by the valve core separating from the valve body.

In some embodiments, an end surface of an end of the valve core away from the valve cavity is defined as the upper limiting portion. Defining the upper limiting portion with the end surface of the valve core do not require designing an extra upper limiting portion on the valve core. The structure of the stop valve is simplified, and the processing cost of the valve core is saved. At the same time, since the end surface of the valve core is limited, the vale core will not extend out of the end port when the valve core moves outward to the farthest position in the valve body. Thus, a moving range of the valve core is limited within the valve body. The valve core is protected from being damaged by a foreign body, and a length of the valve core and an entire size of the stop valve is further reduced.

In some embodiments, the limiting member includes a limiting ring extending along an inner surface of the valve body, the end of the valve core away from the valve cavity has a circular platform-shaped structure and is made of a soft metal, and a side of the circular platform-shaped structure abuts against an inner ring edge of the limiting ring to form a line-surface sealing structure. The soft metal has a small hardness and soft texture and easily deforms under squeezing, so that the soft metal can cause a good sealing effect. In the present embodiment, the valve core matches with and seal the limiting ring, and an extra sealing member is not required. The material cost is saved. A groove configured for accommodating the sealing member disposed on the valve core or valve body is not required, and the structure of the valve core or the valve body is simplified. The processing and assembling difficulty is lowered, and the strength of the component can be ensured. At the same time, problems of affecting the sealing performance caused by peeling off or aging of the sealing member will not occur, maintenance frequency is recued, using experience is improved, and the service life is prolonged.

In some embodiments, the valve core includes a valve rod and a sealing portion, the valve rod is provided with external threads and extends through the internal threaded sleeve, a side of the valve rod adjacent to the valve cavity is provided with a sealing portion, the sealing portion is made of soft metal, and the sealing portion extend into the valve cavity to turn on/off the stop valve. The soft metal has a small hardness and soft texture and easily deforms under squeezing, so that the soft metal can cause a good sealing effect at the valve port. In the present embodiment, the sealing portion match with and seal the valve core, and an extra sealing member is not required. The material cost is saved. A groove configured for accommodating the sealing member disposed on the valve core or valve body is not required, and the structure of the valve core or the valve body is simplified. The processing and assembling difficulty is lowered, and the strength of the component can be ensured. At the same time, problems of affecting the sealing performance caused by peeling off or aging of the sealing member will not occur, maintenance frequency is recued, using experience is improved, and the service life is prolonged.

In some embodiments, the valve core further includes a head portion, the head portion is disposed at an end of the valve rod away from the valve cavity, and the head portion is restricted by the valve body along a circumference of the valve body. At the same time the internal threaded sleeve screws with the screw rod, the internal threaded sleeve also plays a role of circumferentially limiting the screw rod. Therefore, two circumferential limiting portions are defined at intervals along an axis of the valve core, so as to ensure stability of the valve core when the valve core moves along a limiting rout in the valve body.

In some embodiments, an outer size of the head portion is greater than an outer size of the valve rod, so as to form a bulge ring between the head portion and the valve rod, the bulge ring is restricted by an upper end surface of the internal threaded sleeve to limit a moving distance of the valve core towards the valve seat. Since the bulge ring abuts against the upper end surface of the internal threaded sleeve and the valve core is limited by the head portion itself and the upper end surface of the internal threaded sleeve, a lower limiting portion is not required on the valve core, the structure of the valve core is simplified, and the material and the processing coast are saved.

In some embodiments, a sealing ring is disposed between the head portion and the valve body, so as to seal the head potion and the valve body along a circumference of the valve body. Thus, the stop valve is sealed, the medium will not leak in the process of communicating in the stop valve.

In some embodiments, the internal threaded sleeve and the stop valve are individually disposed and fixed together, so that processing technics of the valve body are reduced and processing difficulty of the valve body is lowered.

In some embodiments, a side of the valve body is provided with a second opening, and a projection of the internal threaded sleeve on the valve body along a radial direction of the valve body does not overlap with a projection of the second opening on the valve body along the radial direction of the valve body, so as to prevent the internal threaded sleeve from impeding the medium flow or causing a flow noise.

Details of one or more embodiments of the present application are set forth in the accompanying drawings and description below. Other features, objects, and advantages of the present application will become apparent from the specification, the accompanying drawings, and the claims.

### BRIEF DESCRIPTION OF THE DRAWINGS

Reference may be made to one or more of the accompanying drawings in order to better describe and illustrate those embodiments and/or examples of the invention disclosed herein. The additional details or examples used to describe the accompanying drawings should not be considered a limitation on the scope of any of the disclosed inventions, the embodiments and/or examples presently described, and the best mode of these inventions as presently understood.

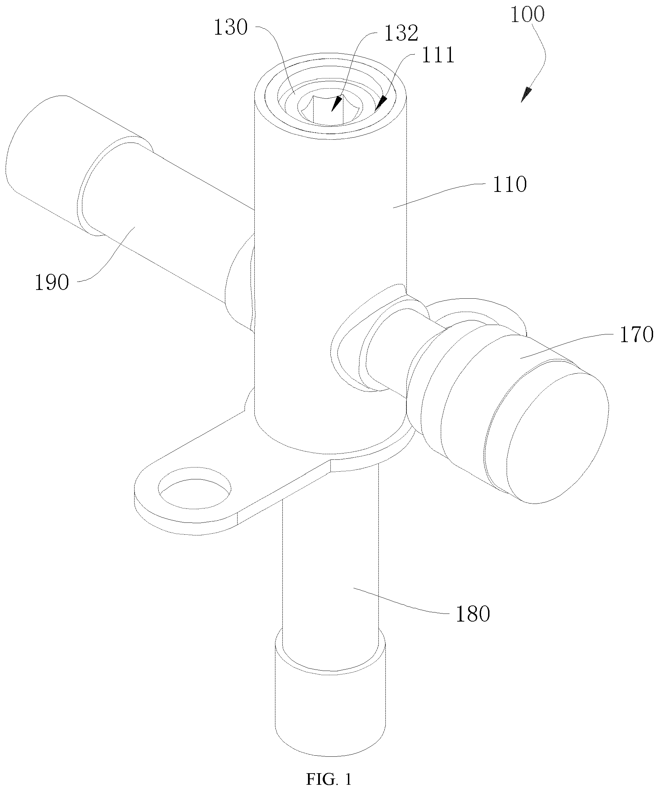

FIG. 1 is a stereo structural schematic diagram of a stop valve in an embodiment of the present invention.
FIG. 2 is a sectional view of a stop valve in an embodiment of the present invention.
FIG. 3 is a partial enlarged figure of A portion in FIG. 2.
FIG. 4 is a partial enlarged figure of B portion in FIG. 2.
FIG. 5 is a sectional view of a valve body in an embodiment of the present invention.

In the figures, 100 represents a stop valve; 110 represents a valve body; 110a represents a valve cavity; 110b represents a mounting cavity; 111 represents an end port; 112 represents a first opening; 113 represents a second opening; 120 represents a valve seat; 121 represents a valve port; 130 represents a valve core; 131 represents a valve rod; 1311 represents external threads; 132 represents an operating portion; 133 represents a head portion; 133a represents a side surface; 1331 represents a mounting groove; 134 represents a sealing portion; 135 represents a bulge ring; 140 represents an internal threaded sleeve; 150 represents a limiting member; 150a represents an inner ring edge; 160 represents a sealing ring; 170 represents an air valve component; 171 represents a connecting body; 172 represents a valve inside; 173 represents a cover piece; 174 represents a sealing member; 175 represents an elastic member; 180 represents a first communicating pipe; and 190 represents a second communicating pipe.

### DETAILED DESCRIPTION

The technical solutions of the embodiments of the present application are explained and illustrated below in conjunction with the accompanying drawings of the embodiments of the present application, but the following embodiments are only the preferred embodiments of the present application and are not exhaustive. Based on the embodiments in the embodiments, other embodiments obtained by a person skilled in the art without making creative labor fall within the scope of protection of the present application.

In addition, the terms "first" and "second" are used for descriptive purposes only, and are not to be construed as indicating or implying relative importance or implicitly specifying the number of technical features indicated. Thus, a feature defined with "first", "second" may expressly or impliedly include one or more such features. In the description of the present application, unless otherwise indicated, "more than one" means two or more, unless otherwise expressly limited.

In the present invention, the terms "disposed", "communicated", "connected", "fixed", etc. are to be broadly construed, unless otherwise expressly specified and limited. For example, the connection may be a fixed connection, a removable connection, or a connection in one piece; it may be a mechanical connection or an electrical connection; it may be a direct connection or an indirect connection through an intermediate medium, and it may be a connection within the two elements. To one of ordinary skill in the art, the specific meaning of the above terms in this application may be understood on a case-by-case basis.

Unless otherwise expressly provided and limited, "over" or "under" the first feature on the second feature may include direct contact between the first and the second features, or may include contact between the first and the second features not directly but through another feature between them. Further, "above", "on", and "over" the first feature includes the first feature being directly above and diagonally above the second feature, or simply indicating that the first feature is horizontally higher than the second feature. The first feature being "below", "under" and "beneath" the second feature includes the first feature being directly below and diagonally below the second feature, or simply indicating that the first feature is horizontally less tall than the second feature.

In this embodiment, when orientation words such as up, down, left, and right are involved, the stop valve is by default vertically mounted as shown in the accompanying drawings. When axial directions are involved, all default to a direction along the center axis of the spool, which will not be repeated below.

The stop valve of the present invention will be further described in details in conjunction with the figures and embodiments hereinafter.

In the present invention, a stop valve 100 is provided. The stop valve 100 can be used in a refrigerating system of an air conditioner. The refrigerating system circulate and transfer heat in a circulation system via a refrigerant to lower the temperature. The stop valve 100 is disposed in a medium passage to cut off or communicate the passage, and supplement the medium into the refrigerating system.

The stop valve 100 includes a hollow valve body 110, a valve seat 120, and a valve core 130. A valve cavity 110a and a mounting cavity 110b are provided inside the valve body 110, and the mounting cavity 110b is in communication with the valve cavity 110a.

The valve seat 120 is disposed in the valve body 110 and at a side of the valve cavity 110a away from the mounting cavity 110b, and the valve seat 120 is provided with a valve port 121. The valve core 130 is disposed in the mounting cavity 110b of the valve body 110, and is capable of moving in the valve body 110, so as to extend into the valve cavity 110a to turn on/off the stop valve.

Brass stop valves in the related art have relatively high costs, and thus the valve body 110 in the present invention is made of stainless steel.

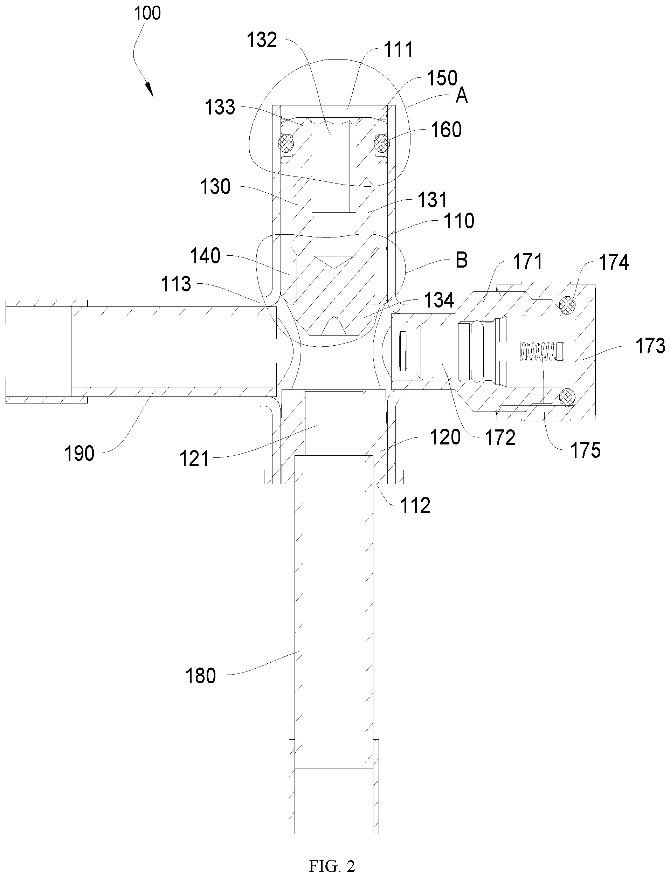

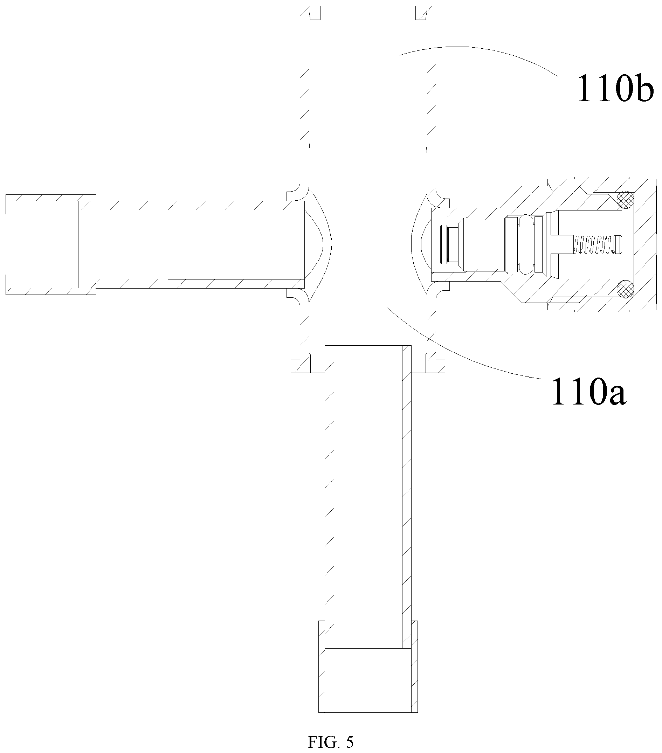

The valve body 110 includes an end port 111, a first opening 112 and a second opening 113. Referring to FIG. 2 and FIG. 5, in the present embodiment, the end port 111 is located at an upper side of the valve body 110. That is, the end port 111 is disposed at a side of the mounting cavity 110b away from the valve cavity 110a. The first opening 112 and the second opening 113 are disposed at a lower side and a right side of the valve body 110, respectively. A valve cavity 110a is defined between the first opening 112 and the second opening 113. The valve seat 120 is disposed at the first opening 112. A side of the first opening 112 away from the valve body 110 is connected to and in communication with a first communicating pipe 180, the first opening 112 is in communication with the outside world via the first communicating pipe 180. A side of the second opening 113 away from the valve body 110 is connected to and in communication with the second communicating pipe 190, and the second opening 113 is in communication with the outside world via the second communicating pipe 190. The first communicating pipe 180 and the second communicating pipe 190 are configured as an inlet or an outlet of the medium, respectively. When the first communicating pipe 180 is used as the inlet of the medium, the medium enters the stop valve 100 via the first communicating pipe 180, and enters the inside of the valve body 110 via the first opening 112. When the stop valve 100 is in the opened state, the medium flows out of the stop valve 100 from the second opening 113 via the second communicating pipe 190. Vice versa, the medium can flow into the valve body 110 via the second opening 113, and flows out of the stop valve 110 via the first opening 112 and the first communicating pipe 180.

Optionally, the first opening 112 and the second opening 113 are not limited to be disposed at the lower side and the right side of the valve body 110 in the present embodiment. In some embodiments, the first opening 112 and the second opening 113 can be disposed at left and right sides of the valve body 110, the upper and the lower sides of the valve body 110, and the like, as long as the two valve ports can be cut off or communicated with each other by axial movement of the valve core.

In order to drive the valve core 130 to move stably in the valve body 110, an operating portion 132 that facilitates operating the valve core 130 is disposed at a position adjacent to the end port 111 on the valve core 130. At the same time, the valve core 130 includes a valve rod 131 including external threads 1311, and the valve body 110 is provided with internal threads matching with the external threads 1311. In a brass stop valve in the related art, the internal threads are directly disposed on the valve cavity 110a of the valve body 110. However, the valve cavity 110a suffers from impact and corrosion of the medium for a long term and the internal threads are damaged.

In the present invention, the valve body 110 is made of stainless steel, and directly processing threads on the stainless steel valve body 110 is difficult and puts high demands for the valve body 110. Therefore, an extra internal threaded sleeve 140 should be disposed in the stainless steel valve body 110. The valve core 130 extends through the internal threaded sleeve 140 and screws with the internal threaded sleeve 140, so as to drive the valve core 130 to move in the valve body 110. At the same time the internal threaded sleeve 140 screws with the valve rod 131, the internal threaded sleeve 140 also guides the valve rod 131 along an axis of the valve body 110 and limits the valve rod 131 along a circumference of the valve body 110. In the related art, the internal threaded sleeve 140 is generally disposed at the end port 111 of the valve body 110 or partially provided above the end port 111 of the valve body 110. Therefore, the external threads 1311 matching with the internal threaded sleeve 140 is generally partially higher than the outside end of the end port 111, and partially extends out of the end port 111, so that a length of the valve core 130 is long and the amount of the material is great.

In order to shorten the length of the valve core 130, according to one of the embodiments of the present embodiment, the internal threaded sleeve 140 is located in the mounting cavity 110 and disposed at a position adjacent to the valve cavity 110a, and the valve core 130 is threadedly connected to the internal threaded sleeve 140. Since the internal threaded sleeve 140 is disposed at a position adjacent to the valve cavity 110a in the mounting cavity 110b, the internal threads of the internal threaded sleeve 140 can be protected from impact and corrosion of the medium. At the same time, a matching section between the valve body 110 and the internal threaded sleeve 140 are also located in the valve body 110, which can improve stability of the valve core 130 when the valve core 130 moves. In addition, the matching section between the valve body 110 and the internal threaded sleeve 140 are also located in the valve body 110, so that the valve core 130 can be shorter and the entire size of the stop valve can be shortened, thereby saving the material.

In some embodiments, a projection of the internal threaded sleeve 140 on the valve body 110 along a radial direction of the valve body 110 is controlled to overlap with a projection of the second opening 113 on the valve body 110 along the radial direction of the valve body 110, so as to prevent the internal threaded sleeve 140 from impeding the medium flow or causing a flow noise.

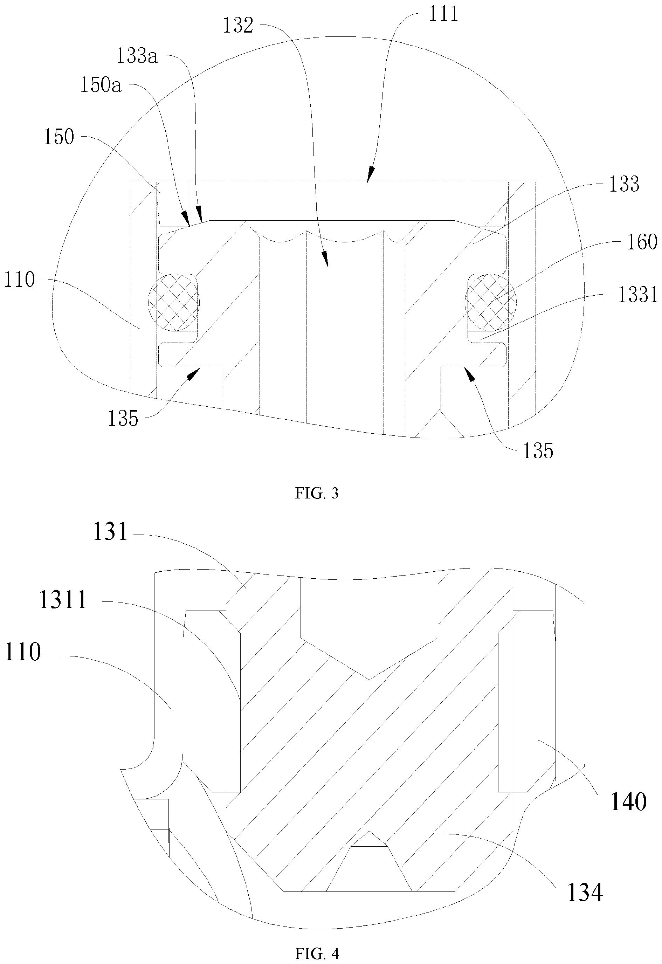

In order to adjusting the position of the internal threaded sleeve 140 according to needs, and facilitate assembling and changing, referring to FIG. 2 and FIG. 4, the internal threaded sleeve 140 and the valve body 110 can be individually disposed, and fixed on the inner wall of the valve body 110 by method of welding and the like, so as to reduce processing to the valve body 110 and lowering difficulty of processing the valve body 110. Of course, the internal threaded sleeve 140 and the valve body 110 can be integrally disposed, so as to facilitate the processing and simplify the assembling.

Under conditions of not influencing turning on/off of the valve port 121 and flowing of the medium, the more adjacent from the internal threaded sleeve 140 to the valve port 121, the shorter the valve core 130 can be designed. In some embodiments, of the present disclosure, the internal threaded sleeve 140 is disposed at a position adjacent to the valve cavity 110a to shorten the length of the valve core 130 as much as possible.

In some embodiments, the internal threaded sleeve 140 can be disposed at other positions in the valve body 110 according to needs. For example, positions such as the middle position between the valve cavity 110a and the end port 111.

Referring to FIG. 2, the valve core 130 in the present embodiment includes a head portion 133, a valve rod 131 and a sealing portion 134. The valve rod 131 is provided with external threads 1311. The head portion 133 and the sealing portion 134 are disposed at both ends of the valve rod 131, respectively. Specifically, the sealing portion 134 is disposed at an end of the valve core 103 adjacent to the valve cavity 110a, and can extend into the valve port 121 by moving of the valve core 130 along the axis of the valve core 130 to turn off the valve port 121. In order to facilitate extending of the sealing portion 134 into the valve port 121, the sealing portion has a circular truncated cone-shaped structure having a shrunk lower end or a shrinking structure. In order to avoid damage of the valve seat 120 or the valve core 130 caused by the valve core 130 immoderately moving inwards into the valve port 121, the valve body 110 is proved with a lower limiting portion. When the valve port 121 is turned off, the lower limiting portion is restricted by the upper end surface of the internal threaded sleeve 140, so as to limit the moving distance of the valve core 130 to the valve seat 120. The internal threaded sleeve 140 has several uses, and an extra lower limiting portion is not required. The internal structure of the valve body 110 is simplified, and the material and the processing cost are saved.

The head portion 133 is disposed at an end of the valve rod 131 adjacent to the end port 111, that is, the head portion 133 is fixed to an end of the valve rod 131 away from the valve cavity 110a. Referring to FIG. 2, in order to improve stability of the valve core 130 after the valve core 130 is disposed in the valve body 110, the head portion 133 is restricted by the valve body 110 along a circumference of the valve head portion 133. Besides, the valve core 130 is limited by the threaded sleeve 140 along the circumference of the valve core 130. Thus, two circumferential limiting portions are defined at intervals along the axis of the valve core 130, so as to ensure the valve core 130 moves along a limited route in the valve core and the stability of the valve core 130 when the valve core 130 moves.

In the present embodiment, an outer surface of the head portion 133 is directly limited by the inner surface of the valve body 110, and the internal threaded sleeve 140 is provided between the valve rod 131 and the inner surface of the valve body 110. Therefore, a radial length of the head portion 133 is greater than a radial length of the valve rod 131. A bulge ring 135 is formed between the head portion 133 and the valve rod 131, and the bulge ring 135 is defined as a lower limiting portion. Since limitation is defined between a structure of the head portion 133 and the upper end surface of the internal threaded sleeve 140, an extra lower limiting portion is not required on the valve core 130, the structure of the valve core 130 is simplified, and the material and the processing cost are saved.

In some embodiments, an auxiliary limiting member is sleeved outside the head portion, so as to form an indirect limitation between the head portion and the valve body 110.

Referring to FIG. 2, the operating portion 132 of the valve core 130 in the present embodiment is a hollow structure extending inwards from the head portion 133, and a plurality of planes are evenly disposed at intervals on the inner surface of the operating portion 132, so that the operating portion 132 can match with tools such as hex wrench and the like.

In some embodiments, the plurality of planes on the inner surface of the operation portion can be continuously and evenly disposed, so as to match with irregular wrenches.

When the valve port 121 should be turned off, the valve rod 131 is positively screwed relative to the internal threaded sleeve 140, the valve rod moves downward relative to the internal threads along the axis of the valve rod 131, and causes the sealing portion 134 and the head portion 133 to move downwards until the sealing portion 134 extends deeply in to the valve port 121 to turn off the valve port 121. When the bulge ring 135 abuts against the upper surface of the internal threaded sleeve 140, the valve core 130 is limited not to move downwards any more.

When the valve port 121 should be turned on, the valve rod 131 is negatively screwed relative to the internal threaded sleeve 140, the valve rod 131 moves upward relative to the internal threaded sleeve 140, and causes the sealing portion 134 and the head portion 133 to move upwards. Thus, the sealing portion 134 moves out of the valve port 121, and continuously moves upward along the axis of the valve core 130 to open a channel having a certain width. But the valve core 130 should not move immoderately upwards the valve port 121 to avoid valve core 130 moving out of the valve body 110 and affecting use of the stop valve 100. Therefore, the upward moving distance of the valve core 130 along the axis of the valve core 130 should be limited.

In the present embodiment, referring to FIG. 2 and FIG. 3, in order to limit the moving distance of the valve core 130 towards the end port 111, the valve body 110 is provided with a limiting member 150, and the valve core 130 is provided with an upper limiting portion. When the valve port 121 is turned on, the upper limiting portion is limited by the limiting member 150. Specifically, the limiting member 150 is located at an inner side of the end port 111, and abuts against the upper surface of the valve core 130 when the valve core 130 moves upward to the farthest position. The end surface of the end of the valve core 130 away from the valve cavity 110a is defined as the upper limiting portion. More specifically, the limiting member 150 abuts against the head portion 133. The upper end surface of the head portion 133 has multiple uses, an extra upper limiting portion is not required on the valve core 130. The structure of the valve core 130 is simplified, the processing cost is saved, and the valve core 130 will not extend out of the end port 111 when the valve core 130 moves outwards to the farthest position in the valve body 110. Therefore, the moving route of the valve core 130 is limited in the valve body 110, the valve core 130 is protected from being damaged by a foreign object, and the length of the valve core 130 and the entire size of the stop valve are further reduced.

The limiting member 150 and the inner wall of the valve body 110 are individually provided, and fixed to the inner wall of the valve body 110 by methods of welding and the like; or the limiting member 150 and the inner wall of the valve body 110 can be integrally disposed.

Referring to FIG. 2, in the present embodiment, the sealing portion 134, the head portion 133 and the valve rod 131 can be integrally disposed, so as to save the assembling steps and matching structures.

In some embodiments, the sealing portion, the head portion and the valve rod can be individually disposed, so as to facilitate processing of the components, reducing chipping steps and improving the processing efficiency.

The stop valve 100 has high sealing requirements. In order to avoid the medium seeping from the valve port 121 when the valve port 121 is turned off, the sealing portion 134 and the valve port 121 should be subjected to a sealing treatment. In related art. other sealing structures such as a red copper sealing ring should be extra disposed between the sealing portion 134 and the valve port 121. The sealing structure is complex, and the sealing efficiency is bad. In the present embodiment, the sealing portion 134 is made of soft metals such as aluminum, zinc, lead, silver and the like. The soft metal has a relative small hardness and soft texture and easily deforms under squeezing, so that the soft metal can cause a good sealing effect at the valve port 121. The sealing portion 134 directly matches with the valve port 121 and seals the valve port 121 without disposing an extra sealing member 174. The material cost is saved. Besides, grooves configured for accommodating the sealing member 174 is not required on the valve core 130 or the valve body 110. The structure is simplified, the difficulty of processing and assembling are lowered, and the strength of the component can be ensured. At the same time, problems of affecting the sealing performance caused by peeling off or aging of the sealing member 174 will not occur, maintenance frequency is recued, using experience is improved, and the service life is prolonged.

In order to prevent the medium from flowing out from a slit between the valve core 130 and the valve body 110, referring to FIG. 2 and FIG. 3, a sealing ring 160 is disposed between the head portion 133 and the valve body 110, so as to seal the head portion and the valve body 110 along a circumference of the valve body, thereby sealing the valve body 110. Specifically, a mounting groove 1331 is provided along an outer surface of the head portion 133, an inner ring of the sealing ring 160 is disposed in the mounting groove 1331, and an outer ring of the sealing ring is in interference fit with the inner surface of the valve body 110 and moves up and down relative to the inner surface of the valve body 110.

In order to prevent the valve port 121 from turning on and the medium from flowing out from the end port 111 of the valve body, an abutting position between the limiting member 150 and the head portion 133 should be subjected to sealing treatment when the valve core 130 moves upward to the farthest position along the axis of the valve core 130. In related art, sealing structures such as a red copper sealing ring is generally extra disposed between the limiting member 150 and the head portion 133. The sealing structure is complex and the sealing efficiency is bad. In the present embodiment, the limiting member 150 is a limiting ring extending along an inner surface of the valve body 110. An end of the valve core 130 away from the valve core 130 has a circular platform-shaped structure and is made of a soft metal, that is, an end of the head portion 133 away from the valve core 130 has a circular platform-shaped structure and is made of a soft metal. A side 133a of the circular platform-shaped structure abuts against an inner ring edge 150a of the limiting ring to form a line-surface sealing structure. The soft metal has a small hardness and soft texture and easily deforms under squeezing, so that the soft metal can cause a good sealing effect. In the present embodiment, the valve core 130 matches with and seal the limiting ring, and an extra sealing member 174 is not required. The material cost is saved. A groove configured for accommodating the sealing member 174 disposed on the valve core or valve body is not required, and the structure of the valve core or the valve body is simplified. The processing and assembling difficulty is lowered, and the strength of the component can be ensured. At the same time, problems of affecting the sealing performance caused by peeling off or aging of the sealing member 174 will not occur, maintenance frequency is recued, using experience is improved, and the service life is prolonged. In addition, the head portion 133 made of the soft metal can play a role of buffer, so as to avoid rigid collision between the head portion 133 and the limiting ring.

Only the head portion 133 and the sealing portion 134 of the valve core 130 may be made of soft metals, and the valve rod 131 may be made of stainless steel, so as to ensure the rigidity and hardness of the valve rod on, reduce abrasion of the valve core 130 in the screwing process and prolong the service life of the valve core 130.

In order to facilitate making the mold, the valve core 130 is made of soft metals throughout so as to facilitate injection molding.

In addition, referring to FIG. 2, the stop valve 100 further includes an air valve component 170. The air valve component 170 is connected to and in communication with the valve body 110. In the present embodiment, the air valve component 170 is disposed opposite to the second opening 113. The air valve component 170 and the second opening 113 are defined as the air inlet or air outlet, and configured for supplementing or discharging the medium for the entire refrigerating system. In some embodiments, an axis of the air valve component 170 is perpendicular to an axis of the second opening 113, and the air valve component 170 can be disposed at other positions of the valve body.

The air valve component 170 includes a connecting body 171 connected to and in communication with the valve body 110, and the connecting body 171 is configured as a passage of the medium entering the valve body 110.

The air valve component 170 further includes a valve inside 172, a cover piece 173 and a sealing member 174. The valve inside 172 is disposed in the connecting body 171, and configured for communicating or cut off the valve body and the connecting body 171. The cover piece 173 is sleeved on the periphery side of the connecting body 171 and configured for protecting the valve inside 172 and preventing the impurity from entering the air valve component 170. The sealing member 174 is located between the cover piece 173 and the connecting body 171, and matches with the cover piece 173 and seal the connecting body 171.

Specifically, an end of the valve inside 172 is provided with an elastic member 175 configured for resetting the valve inside 172. When the valve inside 172 does not bears ambient pressure, the valve inside is maintained closed. At the moment, the connecting body 171 is maintained sealed, and cut off the inside of the valve body 110 from the outside. When the valve inside 172 is stressed, the valve inside 172 squeezes the elastic member 175 and moves towards the valve body, so that the sealing is released and the valve body is in communication with the connecting portion 171. Thus, the medium can flow into the valve body 110 or out of the valve body 110.

The present invention has the following benefits. In the present invention, the internal threaded sleeve is disposed at a position adjacent to the valve cavity in the mounting cavity, which prevents the internal threads of the internal threaded sleeve from impact and corrosion. At the same time, a matching section between the valve body and the internal threaded sleeve is located in the valve body, thus a length of the valve core is short, the material is saved, and the stability of the valve core when the valve core moves is improved. Thus, the entire size of the stop valve is reduced.

The various technical features of the above-described embodiments may be combined arbitrarily, and all possible combinations of the various technical features of the above-described embodiments have not been described for the sake of brevity of description. However, as long as there is no contradiction in the combination of these technical features, they should be considered to be within the scope of this specification.

Those of ordinary skill in the art should realize that the above embodiments are only used to illustrate the present invention, and are not intended to be used as a limitation of the present invention. As long as within the scope of the spirit of the invention, appropriate changes and variations to the above embodiments fall within the scope of the protection claimed by the invention.

## Claims

1. A stop valve, comprising a valve body and a valve core,
wherein the valve body is provided with a valve cavity and a mounting cavity, the mounting cavity is in communication with the valve cavity, the valve core is dispose in the mounting cavity and capable of moving in the mounting cavity, so as to extend into the valve cavity to turn on/off the stop valve,
**characterized in that** the stop valve further comprises an internal threaded sleeve, the internal threaded sleeve is disposed in the mounting cavity and adjacent to the valve cavity, and the valve core is threadedly connected to the internal threaded sleeve.

2. The stop valve of claim 1, wherein a side of the mounting cavity away from the valve cavity is provided with an end port, a limiting member is disposed at the end port, the valve core is provided with an upper limiting portion, and the upper limiting portion is restricted by the limiting member, so as to limit a moving distance of the valve core towards the end port.

3. The stop valve of claim 2, wherein an end surface of an end of the valve core away from the valve cavity is defined as the upper limiting portion.

4. The stop valve of claim 3, wherein the limiting member comprises a limiting ring extending along an inner surface of the valve body, the end of the valve core away from the valve cavity has a circular platform-shaped structure and is made of a soft metal, and a side of the circular platform-shaped structure abuts against an inner ring edge of the limiting ring to form a line-surface sealing structure.

5. The stop valve of any one of claims 1 to 4, wherein the valve core comprises a valve rod and a sealing portion, the valve rod is provided with external threads and extends through the internal threaded sleeve, a side of the valve rod adjacent to the valve cavity is provided with a sealing portion, the sealing portion is made of soft metal, and the sealing portion extend into the valve cavity to turn on/off the stop valve.

6. The stop valve of claim 5, wherein the valve core further comprises a head portion, the head portion is disposed at an end of the valve rod away from the valve cavity, and the head portion is restricted by the valve body along a circumference of the valve body.

7. The stop valve of claim 6, wherein an outer size of the head portion is greater than an outer size of the valve rod, so as to form a bulge ring between the head portion and the valve rod, the bulge ring is restricted by an upper end surface of the internal threaded sleeve to limit a moving distance of the valve core towards the valve seat.

8. The stop valve of claim 6, wherein a sealing member is disposed between the head portion and the valve body, so as to seal the head potion and the valve body along a circumference of the valve body.

9. The stop valve of claim 1, wherein the internal threaded sleeve and the stop valve are individually disposed and fixed together.

10. The stop valve of claim 9, wherein a side of the valve body is provided with a second opening, and a projection of the internal threaded sleeve on the valve body along a radial direction of the valve body does not overlap with a projection of the second opening on the valve body along the radial direction of the valve body.
